**Europäisches Patentamt**

**European Patent Office**

**Office européen des brevets**

(19)

(11) Veröffentlichungsnummer: **0 003 543**
**A1**

(12)

# EUROPÄISCHE PATENTANMELDUNG

(21) Anmeldenummer: **79100245.4**

(22) Anmeldetag: **29.01.79**

(51) Int. Cl.²: **H 04 B 7/185**

(30) Priorität: **02.02.78 DE 2804439**

(43) Veröffentlichungstag der Anmeldung: **22.08.79**
**Patentblatt 79/17**

(84) Benannte Vertragsstaaten: **FR GB IT**

(71) Anmelder: **Licentia Patent-Verwaltungs-GmbH, Theodor-Stern-Kai 1, D-6000 Frankfurt/Main 70 (DE)**

(72) Erfinder: **Seidensticker, Klaus, Stresemannstrasse 5, D-7150 Backnang (DE)**
Erfinder: **Diener, Franco, Einsteinstrasse 12, D-7150 Backnang (DE)**

(54) **Übertragungsanordnung in Ein- und Mehrkanalsystemen.**

(57) Bei der Erfindung handelt es sich um einen vornehmlich im Mikrowellenbereich arbeitenden, beispielsweise im Satellitenfunk eingesetzten Transponder, der die auf einer Frequenz empfangenen Signale verstärkt, auf eine andere Frequenz umsetzt und verstärkt wieder aussendet. Üblicherweise werden für jede Kanalfrequenz bzw. für jeden Frequenzbereich ein oder mehrere Verstärker verwendet, da eine hohe Verstärkung erforderlich ist.

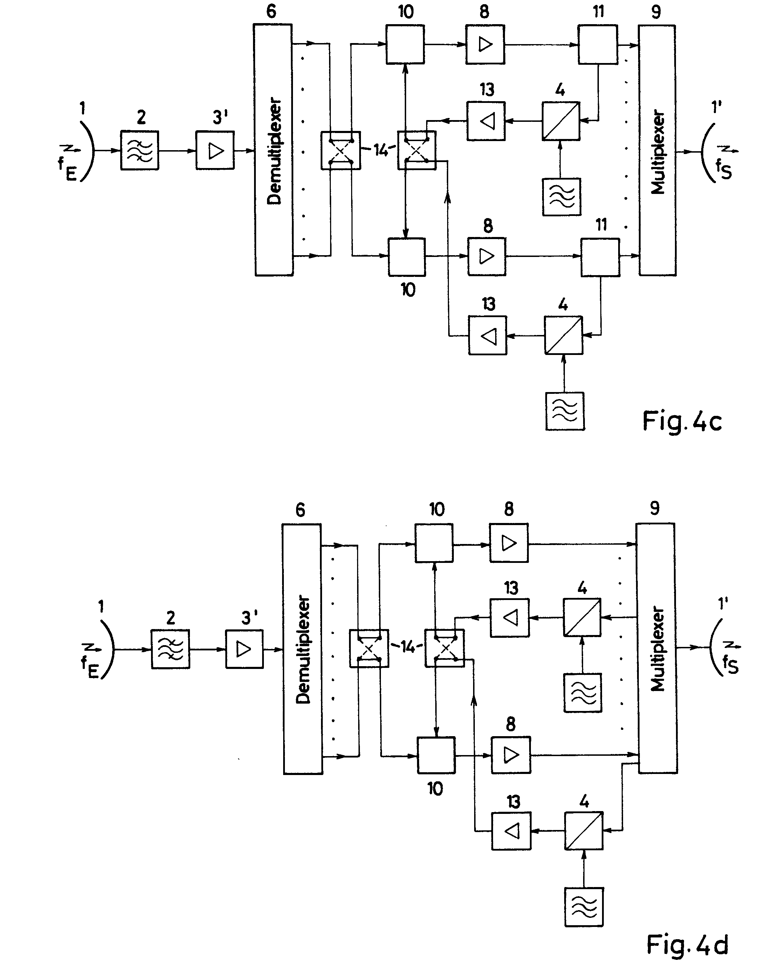

Bei der Erfindung wird nun vorgeschlagen, die teuren Verstärker durch gleichzeitige Verstärkung von Sende- und Empfangssignalen mehrfach auszunutzen, wobei vorteilhafterweise die zur Entkopplung vorgesehenen Weichen (10, 11) in Kanalmultiplexer bzw. -demultiplexer oder bei Einkanalsystemen in Empfangs- (2) bzw. Sendefilter integriert werden. Mittels Transferschalter (14) lassen sich dann ein beliebiger Empfangskanal und ein beliebiger Sendekanal auf einen Verstärker (8) auf- bzw. im Fehlerfall umschalten, was zur Erhöhung der Verfügbarkeit und der Zuverlässigkeit führt (Fig. 4c).

Durch Mehrfachausnutzung der Verstärker kann die Zahl der erforderlichen aktiven Elemente verringert werden, dadurch ergaben sich eine weitere Erhöhung der Zuverlässigkeit, eine Einsparung an Energie und damit eine kleinere Dimensionierung der Stromversorgung.

Licentia Patent-Verwaltungs-GmbH    NE2-BK/Ruf/jo
BK 77/96

- 1 -

## Übertragungsanordnung in Ein- und Mehr-
kanalsystemen

Die Erfindung betrifft eine Übertragungsanordnung mit Frequenzumsetzer und Verstärker in
Einkanalsystemen sowie zusätzlich mit Demultiplexer und Multiplexer in Vielkanalsystemen. Eine solche Übertragungsanordnung wird
vornehmlich beim Satellitenfunk eingesetzt
und arbeitet hauptsächlich im Mikrowellenbereich. Die Übertragungsanordnung, auch Transponder genannt, benötigt bekanntlich eine sehr
hohe Verstärkung. Diese Verstärkung muß bei
Transpondern mit einfacher Frequenzumsetzung
in der Empfangs- und/oder in der Sendefrequenzlage bereitgestellt werden. Üblicherweise sind
zur Erzeugung der hohen Gesamtverstärkung mehrere Verstärker erforderlich: z.B. ein Empfangsvorverstärker und für jeden Übertragungskanal
je ein Sendetreiber- und ein Sendeverstärker.

Die große Verstärkeranzahl hat den Nachteil des
relativ hohen Energieverbrauchs und aufgrund
der großen Anzahl der aktiven Verstärkerelemente
eine relativ kleine Zuverlässigkeit.

- 2 -

Der Erfindung liegt deshalb die Aufgabe zugrunde, unter Beibehaltung der hohen Gesamtverstärkung mit weniger Verstärkern auszukommen.

Die Aufgabe wird durch die in den Ansprüchen angegebenen Mittel gelöst.

Durch die Doppelausnutzung von Empfangsverstärker und/oder Sendeverstärker zur gleichzeitigen Verstärkung von Empfangs- und Sendesignalen ergeben sich folgende Vorteile: Es werden teuere Verstärker eingespart. Durch die Verringerung der Anzahl der aktiven Elemente des Transponders wird die Zuverlässigkeit erhöht. Weiterhin wird an Energieverbrauch eingespart, wodurch die Transponderstromversorgung eine günstigere Dimensionierung erhalten kann.

Im folgenden wird die Erfindung anhand der Figuren näher erläutert. Zunächst zeigt:

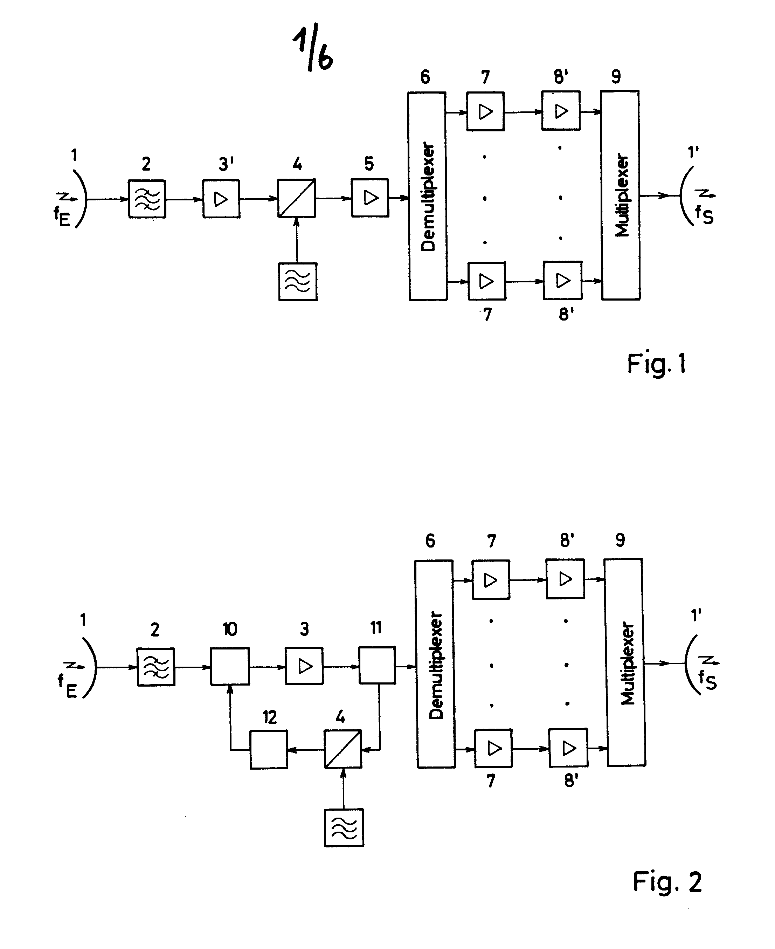

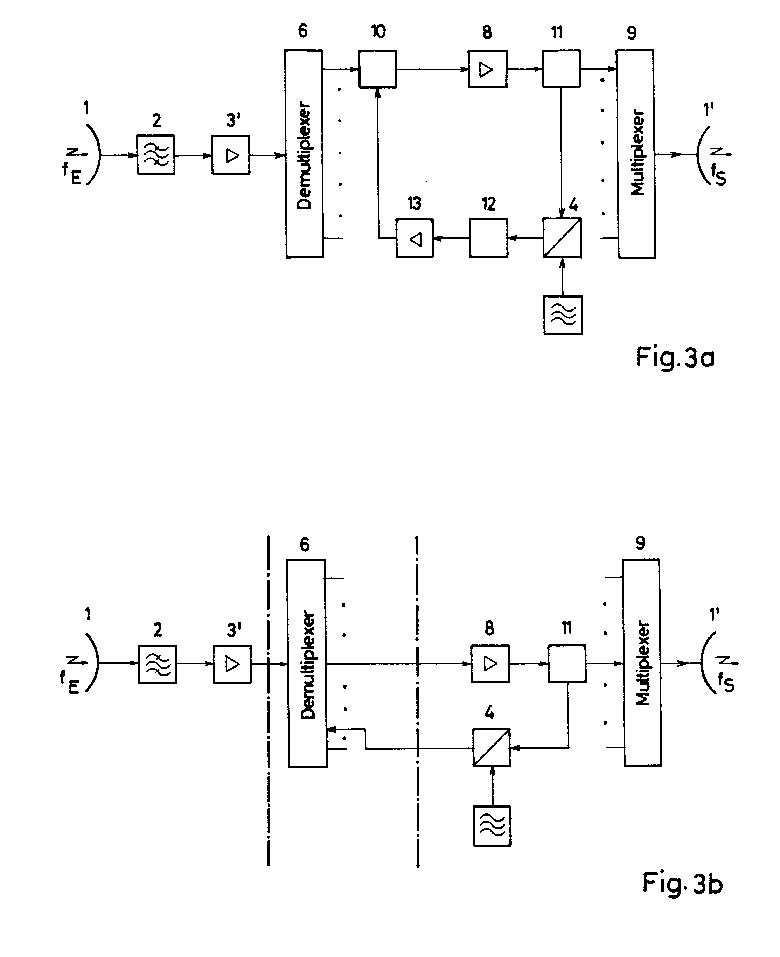

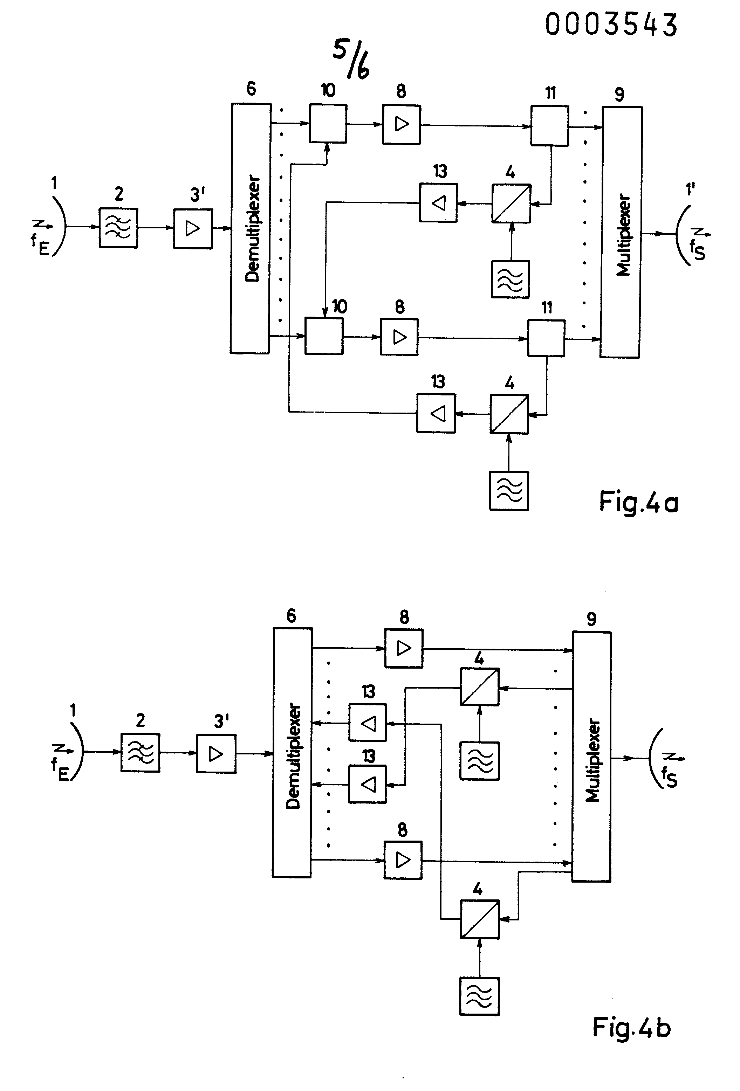

die Fig. 1 die bekannte Form des Einfachumsetzungstransponders. In Fig. 2 wird die Doppelausnutzung des Empfangsverstärkers zur Verstärkung der Empfangssignale und der frequenzumgesetzten Signale (Sendesignale) gezeigt. In den Fig. 3a bis 3f sind Erfindungsmodifikationen dargestellt, bei denen jeder Kanalverstärker doppelt ausgenutzt ist. Dasselbe trifft für die Fig. 4a bis 4d zu.

BK 77/96

- 3 -

Anhand der Fig. 1 seien die einzelnen Elemente des Einfachumsetzungstransponders für mehrere Übertragungskanäle erläutert. Über eine Empfangsantenne 1 und ein Empfangsfilter 2 gelangen die Eingangssignale der Empfangsfrequenzen $f_E$ zu einem Vorverstärker 3', der sie verstärkt zu einem Frequenzumsetzer 4 gibt, in dem sie auf die entsprechenden Transponderausgangsfrequenzen $f_S$ umgesetzt werden. Anschließend erfolgt eine Verstärkung im Verstärker 5 und eine Auftrennung in die einzelnen Übertragungskanäle im Demultiplexer 6. Die Signale der einzelnen Übertragungskanäle werden jeweils in einem Treiberverstärker 7 und in einem sich anschließenden Sendeverstärker 8' verstärkt. Alle Übertragungskanäle werden in einem Multiplexer 9 zusammengefaßt und einer Sendeantenne 1' zugeführt.

In Fig. 2 ist ein vorteilhaftes Ausführungsbeispiel der Erfindung dargestellt, das sich von der bekannten Transponderform dadurch unterscheidet, daß bei ihm der Empfangsverstärker 3 gleichzeitig die Empfangs- und Sendesignale verstärkt. Dazu werden die im Empfangsverstärker 3 verstärkten Empfangssignale mit Hilfe der Weiche 11 von den Sendesignalen getrennt, dem Frequenzumsetzer 4 zugeführt, dort in die Sendefrequenzlage umgesetzt und über eine Weiche 10 wiederum dem Empfangsverstärker 3 zugeführt. Die verstärkten Sendesignale gelangen über die Weiche 11 zum Demultiplexer 6.

BK 77/96

- 4 -

Gemäß der Fig. 2 wird in einer vorteilhaften Weiterbildung der Erfindung zwischen Frequenzumsetzer 4 und Weiche 10 ein einstellbares Laufzeitglied und/oder ein Amplitudenentzerrer 12 eingesetzt. Eine weitere vorteilhafte Modifikation der Erfindung bildet die Integration des Empfangsfilters 2 und der Weiche 10.

Die Fig. 3a zeigt die Doppelausnutzung des Sendeverstärkers 8 zur Verstärkung eines einzelnen Übertragungskanals vor und nach der Frequenzumsetzung. Die im Verstärker 8 verstärkten Signale des Übertragungskanals werden mittels einer Weiche 11 ausgekoppelt, durch einen Frequenzumsetzer 4 umgesetzt, durch ein einstellbares Laufzeitglied 12 in eine optimale Phasenlage gebracht bzw. durch einen Amplitudenentzerrer entzerrt, durch einen Treiberverstärker 13 verstärkt und über eine Weiche 10 dem Sendeverstärker 8 wieder zugeführt. Über die Weiche 11 erfolgt die Auskopplung in den Multiplexer 9.

Die Fig. 3b zeigt eine Modifikation der Erfindung nach Fig. 3a, wobei Laufzeitglied und/oder Amplitudenentzerrer 12 und Treiberverstärker 13 fehlen und die Weichen 10 in den Demultiplexer 6 integriert sind. Eine mögliche Realisierung dieser Integration mittels Richtkoppler 15, Zirkulator 16, den Bandpässen 17, 18 und T-Verzweigung 19 zeigt

BK 77/96

- 5 -

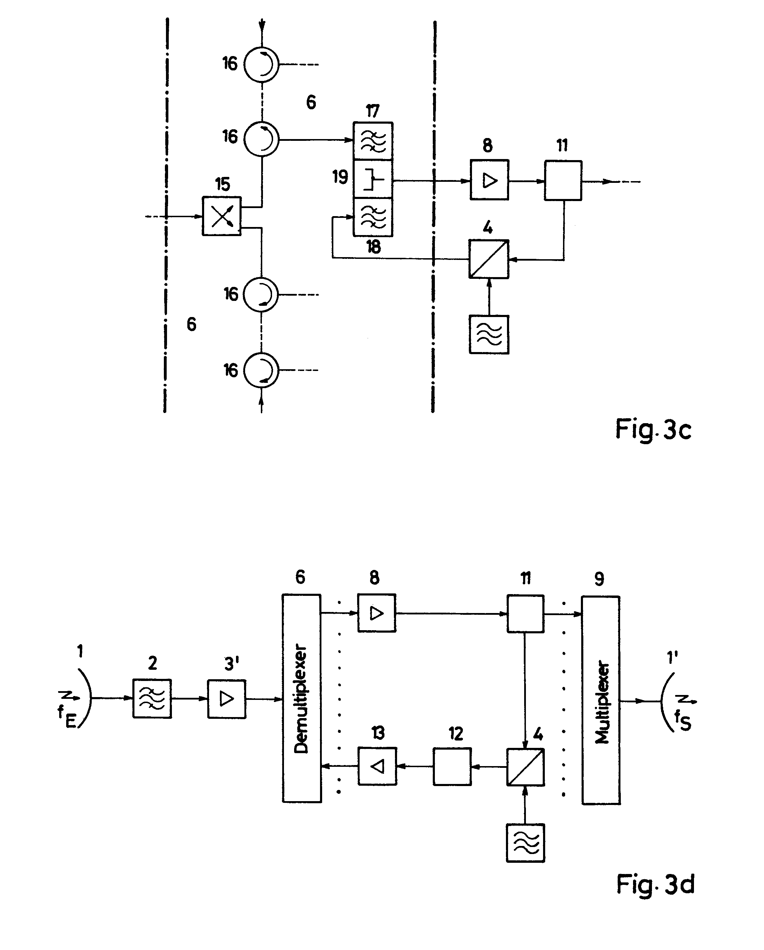

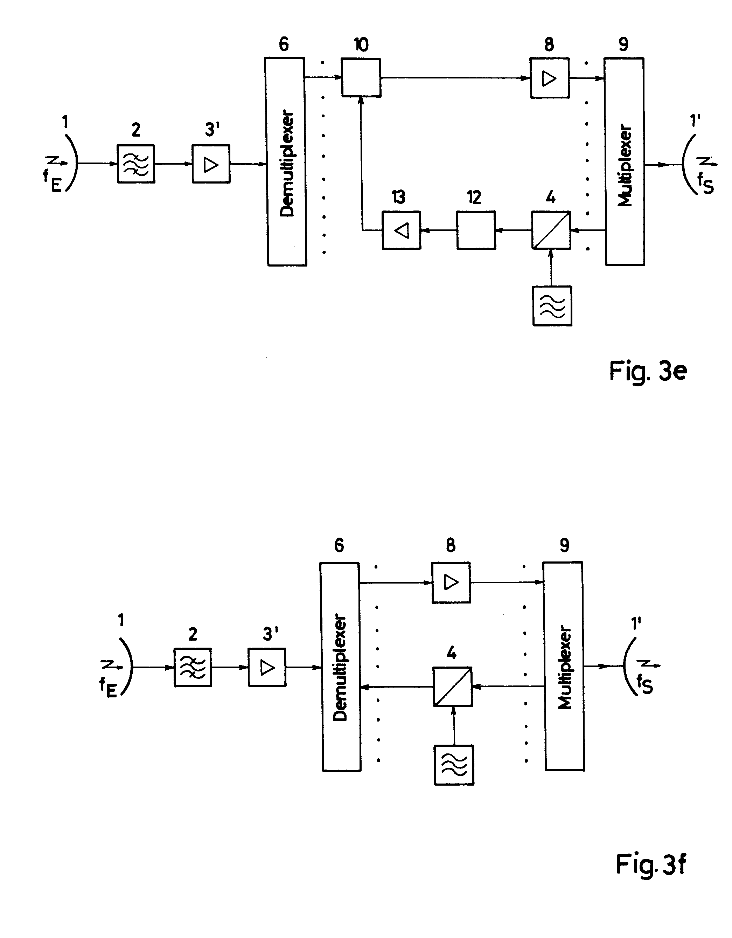

die Fig. 3c. Die Fig. 3d zeigt die Erfindung in der Ausführung nach der Fig. 3b, jedoch mit Laufzeitglied bzw. Amplitudenentzerrer 12 und Treiberverstärker 13. In der Fig. 3e wird die Erfindung in der Ausführungsform nach Fig. 3a gezeigt, wobei jedoch die Weichen 11 in den Multiplexer 9 integriert sind. Nach Fig. 3f sind sowohl die Weichen 10 als auch die Weichen 11 in den Demultiplexer 6 bzw. Multiplexer 9 integriert.

Die Fig. 4a zeigt eine für einige Anwendungen besonders günstige Ausgestaltung der Erfindung, bei der der Sendeverstärker 8 die Signale eines ersten Übertragungskanals und gleichzeitig die frequenzumgesetzten Signale eines zweiten Übertragungskanals verstärkt. Die Entkopplung erfolgt jeweils in den Eingangsweichen 10 bzw. Ausgangsweichen 11. Die frequenzumgesetzten Signale werden zusätzlich durch einen Treiberverstärker 13 verstärkt. Der Vorteil dieser Anordnung gegenüber den Erfindungsausbildungen nach den Fig. 3 besteht in der gleichzeitigen Verstärkung nicht korrelierter Signale.

Die Fig. 4b zeigt die Anordnung nach Fig. 4a, wobei jedoch die Eingangsweichen 10 in den Demultiplexer 6 und die Ausgangsweichen 11 in den Multiplexer 9 integriert sind. Die Fig. 4c zeigt eine weitere Aus-

BK 77/96

- 6 -

gestaltung der Erfindung nach Fig. 4a, wobei jeder Sendeverstärker 8 mittels Transferschalter 14 wahlweise mit den frequenzumgesetzten Signalen des ihm zugeordneten Übertragungskanals oder eines zweiten Übertragungskanals beaufschlagt werden kann. Durch diese Transferschalter kann die Zuverlässigkeit weiter erhöht werden. Bei Umschaltung auf gleichzeitige Verstärkung der Empfangs- und Sendesignale desselben Übertragungskanals werden auch die Empfangssignale zum Eingang der Weiche 10 umgeschaltet, damit jeweils die Sendesignale der zugeordneten Weiche 11 bzw. dem zugeordneten Kanalfilter des Multiplexers 9 zugeführt werden. Die Fig. 4d zeigt die Anordnung nach Fig. 4c, wobei die Weichen 11 in den Multiplexer 9 integriert sind.

BK 77/96

- 1 -

Patentansprüche:

1. Übertragungsanordnung mit Frequenzumsetzer und Verstärker in Einkanal- oder zusätzlich mit Demultiplexer und Multiplexer in Vielkanalsystemen, beispielsweise als Mirkowellen-Transponder in Satelliten,
dadurch gekennzeichnet,
daß mindestens ein Verstärker (3, 8) derart ausnutzbar ist, daß frequenzumgesetzte (z.B. Sendesignale) und nicht frequenzumgesetzte Signale (Empfangssignale) verstärkt werden.

2. Übertragungsanordnung nach Anspruch 1,
dadurch gekennzeichnet,
daß die Verstärkung der frequenzumgesetzten und der nicht frequenzumgesetzten Signale gleichzeitig erfolgt und daß zur Entkopplung der frequenzumgesetzten und der nicht frequenzumgesetzten Signale mindestens zwei Weichen als Eingangsweiche (10) am Eingang und als Ausgangsweiche (11) am Ausgang des Verstärkers (3, 8) vorgesehen sind.

3. Übertragungsanordnung nach Anspruch 2,
dadurch gekennzeichnet,
daß die Weiche (10, 11) als T-Verzweigung (19), als Richtkoppler oder als Richtungsfilter ausgebildet ist.

BK 77/96

0003543

- 2 -

4. Übertragungsanordnung nach Anspruch 3,
   dadurch gekennzeichnet,
   daß die Weiche (10, 11) mit einem Filter für frequenzumgesetzte (18) und/oder nicht frequenzumgesetzte Signale (17) versehen ist.

5. Übertragungsanordnung nach einem oder mehreren der vorhergehenden Ansprüche, dadurch gekennzeichnet, daß zur Entzerrung der frequenzumgesetzten Signale ein einstellbares Laufzeitglied und/oder ein Amplitudenentzerrer (12) vorgesehen sind.

6. Übertragungsanordnung nach einem oder mehreren der vorhergehenden Ansprüche, dadurch gekennzeichnet, daß der Verstärker (3) ein Breitbandverstärker ist und für die Verstärkung aller Empfangssignale vorgesehen ist.

7. Übertragungsanordnung nach Anspruch 6, dadurch gekennzeichnet, daß ein Empfangsfilter (2) vorgesehen ist, das mit der Eingangsweiche (10) integriert ist.

8. Übertragungsanordnung nach einem oder mehreren der Ansprüche 1 bis 5, dadurch gekennzeichnet,

BK 77/96

daß der Verstärker (8) zur Verstärkung der Signale einzelner Übertragungskanäle ausnutzbar ist, wobei die frequenzumgesetzten und die nicht frequenzumgesetzten Signale desselben Übertragungskanals verstärkbar sind oder die nicht frequenzumgesetzten Signale eines beliebigen ersten und die frequenzumgesetzten Signale eines beliebigen zweiten Übertragungskanals verstärkbar sind und daß auf den Verstärker (8) die nicht frequenzumgesetzten Signale des ersten und die frequenzumgesetzten Signale des zweiten oder des ersten Übertragungskanals aufschaltbar sind, beispielsweise mittels Transferschalter (14).

9. Übertragungsanordnung nach Anspruch 8, dadurch gekennzeichnet, daß für die Verstärkung der frequenzumgesetzten Signale zusätzlich ein Treiberverstärker (13) vorgesehen ist und daß die Verstärker (3, 8, 13) redundante Zweige aufweisen und/oder selbst in redundanter Anzahl vorhanden sind.

10. Übertragungsanordnung nach Anspruch 8 oder 9, dadurch gekennzeichnet, daß die Eingangsweichen (10) mit dem Demultiplexer (6) und/oder die Ausgangsweichen (11) mit dem Multiplexer (9) integriert sind.

BK 77/96

0003543

1/6

Fig. 1

Fig. 2

Fig. 3a

Fig. 3b

Fig. 3c

Fig. 3d

BK 77/96

Fig. 3e

Fig. 3f

Fig.4a

Fig.4b

BK 77/96

0003543

Fig.4c

Fig.4d

BK 77/96

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | COLLOQUE INTERNATIONAL L'ESPACE ET LA COMMUNICATION, Band 2, Paris 2. Marz – 2. April 1971, Chiron, Paris V. BIGGI et al. "Emploi d'un tube à ondes progressives en montage reflex dans les communications spatiales", Seiten 972-980 <br><br> * Figuren 1,5 * <br><br> -- | 1,2,4, 6,8 |
| X | PROCEEDINGS OF THE 1965 NATIONAL TELEMETERING CONFERENCE", April 1965, Winner New York, U.S.A. P.E. TUCKER. "The Reflex Repeater: A Direct RF-to-RF Repeater", Seiten 164-170 <br><br> * Figuren 1A und 2A * <br><br> -- | 1-4,6, 7 |
| | FR - A - 1 402 311 (MIN. OF AVIATION) <br><br> * Figuren * <br><br> -- | 1-4,6 |
| | FR - A - 2 057 218 (THOMSON-CSF) <br> * Figur 3 * <br><br> -- | 1,2,4, 6 |
| | US - A - 2 770 722 (ARAMS) <br> * Figuren 1,3 * <br><br> -- | 1-6,8 |
| A | US - A - 3 048 794 (ARES) <br> * Figur 1 * <br><br> --     ./. | 1-3,5, 6 |

**KLASSIFIKATION DER ANMELDUNG (Int.Cl.²)**

H 04 B 7/185

**RECHERCHIERTE SACHGEBIETE (Int. Cl.²)**

H 04 B 7/185
7/155
H 04 J 1/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 24-04-1979 | GEISLER |

EPA form 1503.1 06.78

Europäisches
Patentamt

**EUROPÄISCHER RECHERCHENBERICHT**

000 35 43

Nummer der Anmeldung

EP 79 10 0245

-2-

| | **EINSCHLÄGIGE DOKUMENTE** | | **KLASSIFIKATION DER ANMELDUNG (Int.Cl.²)** |
|---|---|---|---|
| Kategorie | Kennzeichnung des Dokuments mit Angabe, soweit erforderlich, der maßgeblichen Teile | betrifft Anspruch | |
| A | IEEE INTERNATIONAL CONFERENCE ON COMMUNICATIONS, 11-13 Juni 1973 Seattle, IEEE New York, U.S.A. M.V. O'DONOVAN et al. "A Light-weight Transponder Design for the U.S. Domestic Communications", Seiten 49.1 - 49.9 <br><br> * Figur 1 * <br><br> ---- | 1,9 | |
| | | | **RECHERCHIERTE SACHGEBIETE (Int. Cl.²)** |

EPA Form 1503.2  06.78